# EUROPÄISCHE PATENTSCHRIFT

(11) **EP 0 793 075 B1**
(45) Veröffentlichungstag und Bekanntmachung des Hinweises auf die Patenterteilung: **25.09.2002**
(21) Anmeldenummer: 96103238.0
(22) Anmeldetag: 02.03.1996
(51) Int. Cl.: G01D 3/02, G01D 5/14

(54) **Monolithisch integrierte Sensorschaltung**
Monolithic integrated sensor circuit
Circuit capteur intégré monolithique

(43) Veröffentlichungstag der Anmeldung: 03.09.1997
(73) Patentinhaber: Micronas GmbH, 79108 Freiburg (DE)
(72) Erfinder: Theus, Ulrich, Dr.-Ing., D-79194 Gundelfingen (DE); Motz, Mario, Dipl.-Ing., D-79346 Endingen (DE)

(56) Entgegenhaltungen:
- EP-A- 0 115 391
- EP-A- 0 536 667
- EP-A- 0 548 391
- WO-A-92/22093

## Beschreibung

Die Erfindung betrifft eine monolithisch integrierte Sensorschaltung, die ein elektronisches Sensorsystem enthält, das aus einer zugeführten physikalischen Eingangsgröße am Ausgang ein elektronisches Sensorsignal bildet, dessen Wert und Polarität möglichst eng mit der zu messenden physikalischen Größe verkoppelt sind. Derartige Sensorsysteme zur Messung von Druck, Beschleunigungen, Temperatur, Strom, Magnetfeldern usw. sind bekannt. Bei der monolithischen Integration ist in vielen Fällen eine Kompensation von Fehlerquellen möglich, die durch Herstellungstoleranzen und Temperatureffekte bewirkt werden. Hierbei wird ausgenutzt, daß bei der monolithischen Integration die absoluten Toleranzen zwar groß, die relativen Toleranzen jedoch sehr klein sind. Durch eine geschickte Paarung oder symmetrische Gestaltung der Schaltung lassen sich die großen Absoluttoleranzen vermeiden, so daß nur noch die kleinen Relativtoleranzen wirksam sind. Ferner sind bei integrierten Schaltungen in der Regel die einzelnen Stufen nicht mehr abgleichbar. Zur Abhilfe können jedoch aufwendige Regelschaltungen mitintegriert werden, durch die derartige Abgleiche nicht mehr erforderlich sind.

Neben der Nichtlinearität der einzelnen Sensorsysteme stören insbesondere die Offsetfehler der gesamten Sensorschaltung. Diese schwer zu beseitigenden Fehler wirken sich meist als Gleichspannungs-Offsetfehler aus, die zu Signalverfälschungen führen, wenn ihre Größe nicht mehr vernachlässigbar zum elektronischen Signal aus dem jeweiligen Sensor ist. In der Regel liefert bereits der Sensor ein offsetbehaftetes Signal, zu dem noch die Offsetfehler der einzelnen Stufen des nachfolgenden Verstärkers hinzukommen. Im ungünstigsten Fall addieren sich alle Offsetfehler. Die ausnutzbare Empfindlichkeit und Genauigkeit der gesamten Sensorschaltung ist somit grundsätzlich durch die mögliche Summe aller Offsetfehler begrenzt, die einen maximalen (worst case) Offsetfehler für den ungünstigsten Fall definiert.

Es ist daher Aufgabe der im Anspruch 1 gekennzeichneten Erfindung, eine monolithisch integrierte Sensorschaltung anzugeben, deren gesamter Offsetfehler möglichst klein ist.

Diese Aufgabe wird gemäß der Erfindung nach den Merkmalen des Anspruchs 1 für eine monolithisch integrierte Sensorschaltung mit einem Sensorsystem zur Erzeugung eines elektronischen Sensorsignals auf folgende Weise gelöst:
- einer Speiseeinrichtung für das Sensorsystem,
- einer Verstärkungseinrichtung zur Verstärkung des Sensorsignals,
- Invertierungseinrichtungen im Signalpfad der Verstärkungseinrichtung, die mittels eines Umschalttaktes aus einer Taktsignalquelle das Sensorsignal in zeitlich gleichen Intervallen in der Polarität umschalten, und
- einer mittelwertbildenden Kombinationsstufe, deren Eingang mit einem verstärkten Sensorsignal gespeist ist, wobei eine Bezugspolarität am Ausgang der Kombinationsstufe unabhängig vom Schaltzustand im Signalpfad mittels der Invertierungseinrichtungen gleichbleibend gesteuert ist.

Der Vorteil der Erfindung besteht darin, daß durch die periodische Signalinvertierung der Offsetfehler der einzelnen Verstärkerstufen herausgemittelt wird. Das Verfahren ist dabei ähnlich den bekannten Chopper-Verfahren, liefert jedoch am Ausgang der Kombinationsstufe ein kontinuierliches Signal ohne Unterbrechungen. Dies ist wichtig, wenn mit dem jeweiligen Sensorsystem physikalische Größen gemessen werden sollen, die sehr niederfrequente Frequenzanteile oder gar Gleichanteile aufweisen. Bei der Verwendung von Feldeffekttransistoren in der Auswerteschaltung sind diese niederen Frequenzbereiche oft von Funkelrauschen überlagert. Da sich dieses Funkelnrauschen wie ein Offsetfehler auswirkt, wird es durch die Sensorschaltung nach der Erfindung unterdrückt. Auch erfordert die Sensorschaltung nach der Erfindung nur eine geringe Außenbeschaltung, die allenfalls in Hilfsfunktionen eingreift, beispielsweise die Frequenz der Taktsignalquelle ändert.

Das Sensorsystem kann auf vorteilhafte Weise auch als Differenz-Sensorsystem ausgebildet sein. In diesem Fall werden die Ausgangssignale von zwei auf dem Chip getrennten Sensorsystemen je nach der Polarität additiv oder subtraktiv, z.B. antiparallel, zusammengeschaltet und gemeinsam der Verstärkungseinrichtung zugeführt.

Die Erfindung eignet sich ganz besonders für ein Hall-Sensorsystem, das monolithisch mit der zugehörigen Auswerteschaltung auf einem Chip integriert ist. Die geringe Empfindlichkeit der mitintegrierten Hall-Platten wird durch eine größere Verstärkung kompensiert, wobei die Anssteuerung der Hall-Platten durch die thermische Kopplung auf dem Chip so gesteuert werden kann, daß ein beliebiger Temperaturgang erreicht wird. Es lassen sich durch aufwendige Auswerteeinrichtungen und Hilfsschaltungen somit beliebig "intelligente" Sensorschaltungen auf dem Chip herstellen.

Eine weitere Verbesserung wird erreicht, wenn das Hall-Sensorsystem in der Stromrichtung umschaltbar ist, weil dadurch einmal die erforderliche Signalumkehr für die Verstärkungseinrichtung ermöglicht wird und zum anderen aber auch die herstellungs- und streßbedingten Offsetfehler der Hall-Platten unterdrückt werden können. Die Offsetfehler treten durch die Umschaltung mit positiven und negativen Vorzeichen auf, so daß sie bei der Mittelwertbildung herausfallen, während sich die Hall-Spannungen bei geeigneter Umschaltung des Signalpfades addieren. Umschaltbare Hall-Sensoren mit denen die Offsetfehler der Hall-Platten beseitigt werden können, sind beispielsweise ausführlich in EP 0 548 391 A1 beschrieben (ITT Case: C-DIT-1445).

Mittels einer symmetrischen Ausgestaltung des Signalpfades und der zugehörigen Schaltungseinrichtungen - also eine durchgehende Differenzsignalverarbeitung - kann erreicht werden, daß die monolithisch integrierte Sensorschaltung sehr unempfindlich gegenüber Störeinstrahlungen wird, weil sich diese im wesentlichen als Gleichtaktsignale auswirken, die entweder ausgeregelt werden oder sich infolge der Schaltungssymmetrie nicht auswirken. Ferner werden auch die Einflüsse anderer Gleichtaktfehlerquellen unterdrückt. Beispielsweise: dynamische Offsetfehler durch die Schalteinrichtungen, Nichtlinearitäten der Schalteinrichtungen und der Gegenkopplungswiderstände sowie Gleichtaktfehler der einzelnen Verstärkerstufen. Mit den Regelschaltungen kann der Arbeitspunkt des symmetrischen Signalpfades auch auf einem vorgegebenen Spannungspegel gehalten werden, beispielsweise bei 2,5 V im Falle der 5 V-Versorgung bei CMOS-Schaltungen. Dieser mittlere Arbeitspunkt ermöglicht auch, daß positive und negative Sensorsignale gemessen werden können, wodurch der Dynamikbereich verdoppelt wird.

Zweckmäßigerweise wird die Verstärkungseinrichtung als rückgekoppelte Operationsverstärkeranordnung ausgebildet. Beim Hall-Sensorsystem bildet der Innenwiderstand der angeschlossenen Hall-Platten den Eingangswiderstand. Die Rückkopplungswiderstände basieren auf dem gleichen Halbleitermaterial wie die Hall-Platten, damit ein guter Gleichlauf bezüglich der Herstellungstoleranzen und der Temperatur ermöglicht wird. Als einzelne Verstärkungsstufen, die auch die Kombinationsstufe bilden können, eignen sich insbesondere Transkonduktanzverstärker, die leicht zu stabilisieren und in CMOS-Technik einfach zu realisieren sind. So läßt sich die mittelwertbildende Kombinationsstufe beispielsweise mittels eines kapazitiv rückgekoppelten Transkondukanzverstärkers realisieren, wobei die resultierende Zeitkonstante günstigerweise größer sein sollte wie eine oder mehrere Perioden des Umschalttaktes, mindestens jedoch so groß wie der Nichtüberlappungsbereich b3. Die Eingänge der Transkonduktanzverstärker sind gleichstromfrei, weil sie durch Gate-Anschlüsse von Feldeffekt-Transistoren gebildet sind. Dadurch können die mitintegrierten Kondensatoren die erforderliche Signalspeicherung leicht realisieren und die Spannung für die Mittelwertbildung konstant halten.

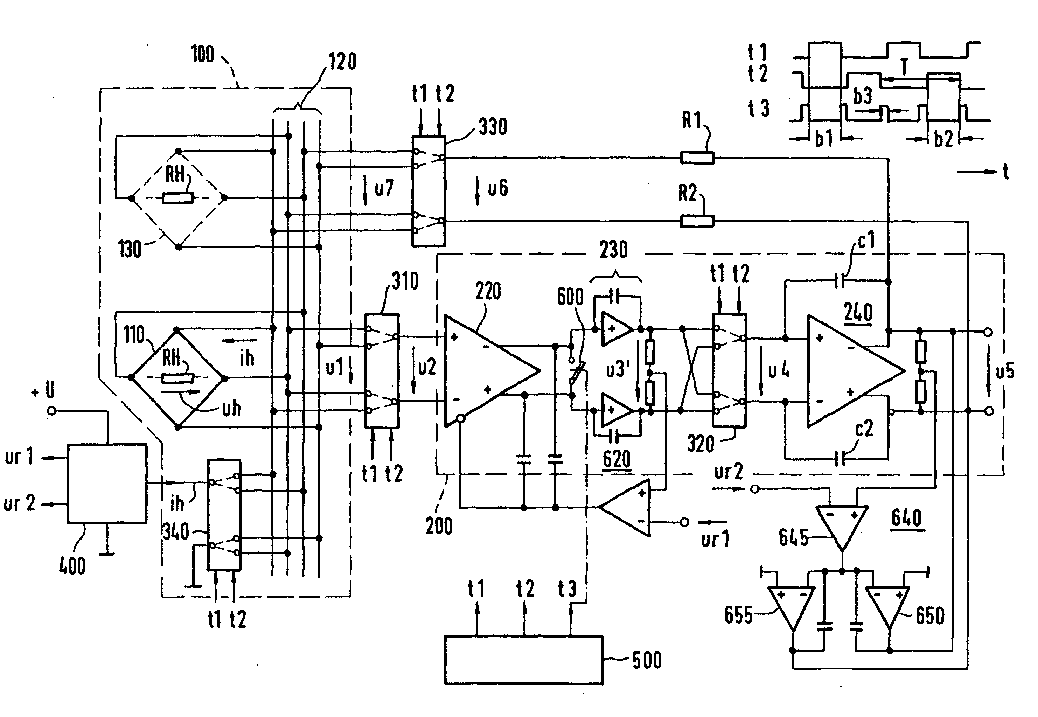

Die Erfindung wird nun ausführlich anhand eines vorteilhaften Ausführungsbeispieles näher erläutert, das in Fig. 1 mittels eines Blockschaltbildes dargestellt ist.

Fig. 1 zeigt schematisch eine monolithisch integrierte Sensorschaltung, wobei als Sensorsystem ein umschaltbares Hall-Sensorsystem dargestellt ist. Dieses Sensorsystem kann selbstverständlich auch durch ein Sensorsystem für Druck, Temperatur, Strahlung usw. ersetzt werden. An der grundsätzlichen Funktionsweise ändert sich dadurch nichts. Der Ausgang des Sensorsystems 100 liefert eine Differenzspannung u1, die mittels einer Verstärkungseinrichtung 200 verstärkt wird und schließlich als differenzielles Ausgangssignal u5 abgegeben wird. Die Verstärkungseinrichtung 200 entspricht einem Operationsverstärker mit zwei getrennten Verstärkerstufen. Der eigentliche Signalverstärker ist der Eingangsverstärker 220, während die Ausgangsstufe 240 nur eine geringe Verstärkung hat und zudem durch eine kapazitive Rückkopplung mittels zweier Kondensatoren c1, c2 ein Tiefpaßverhalten aufweist. Der Ausgangsstufe 240 kommt nämlich entsprechend der Erfindung auch die Funktion einer mittelwertbildenden Kombinationsstufe zu und stellt eine dynamische Kompensation des rückgekoppelten Verstärkers 200 dar und verhindert einen instabilen Betrieb oder gar Schwingen.

Die Rückführung des Ausgangssignals u5 der Operationsverstärkeranordnung 200 erfolgt über einen ersten und zweiten Rückkopplungswiderstand R1, R2, die über elektronische Schalteinrichtungen 330, 310 mit den beiden Eingängen des Eingangsverstärkers 220 verbunden sind. Der Eingangswiderstand der Operationsverstärkeranordnung 200 wird durch einen Ersatzwiderstand RH gebildet, der dem Widerstand sämtlicher zwischen den Sensor-Meßausgängen angeschlossenen Hall-Platten entspricht. Dieser Ersatzwiderstand RH liegt zwischen dem invertierenden und nichtinvertierenden Eingang des Eingangsverstärkers 220. Die Gesamtverstärkung der Operationsverstärkeranordnung 200 ist somit 2xR1/RH, mit R1 = R2.

Zur Speisung des jeweiligen Sensorsystems 110 und der gesamten Schaltungsanordnung dient eine Speiseeinrichtung 400, die die erforderlichen Ströme und Hilfsspannungen, gegebenenfalls auch mit einem vorgegebenen Temperaturgang, für die gesamte Schaltung zur Verfügung stellt, und gegebenenfalls auch eine geregelte Versorgungsspannung aus der zugeführten Spannung +U erzeugt. Die Speiseeinrichtung 400 ist dabei technologisch mit den Hall-Platten 110, 130 eng verkoppelt, so daß ein guter thermischer Gleichlauf erzielt wird und Herstellungstoleranzen kompensiert sind. Die Schaltung enthält ferner eine Taktsignalquelle 500, die einen ersten und dazu nichtüberlappenden zweiten Umschalttakt t1, t2 erzeugt, deren Schaltintervalle b1, b2 gleichgroß sind. Die Taktfrequenz liegt beispielsweise bei 100 kHz, so daß die Periodendauer T 10 Mikrosekunden beträgt. Die Taktsignalquelle 500 kann auch ein drittes Taktsignal t3 abgeben, das den Nichtüberlappungsbereichen b3 entspricht, die etwa 20 Nanosekunden lang sind.

Mit der Verstärkungseinrichtung 200 ist eine erste und zweite Regelschaltung 620, 640 gekoppelt, um die Arbeitspunkte des Eingangsverstärkers 220 und der Ausgangsstufe 240 auf einem vorgegebenen Spannungswert ur1 bzw. ur2 halten.

Im Signalpfad der Operationsverstärkeranordnung 200 sind an den wesentlichen Schnittstellen die für die Erfindung erforderlichen Invertierungseinrichtungen 310, 320, 330, 340 eingefügt, die von dem ersten und zweiten Umschalttakt t1, t2 gesteuert sind. Durch die symmetrische Auslegung des Signalpfades bewirkt der eine Umschalttakt t1 bzw. t2 eine direkte Durchschaltung und der andere Umschalttakt t2 bzw. t1 eine Kreuzumschaltung des Signalpfades. Während der kurzen Nichtüberlappungszeit b3 wird der Signalpfad aufgetrennt, so daß eine gegenseitige Signalbeeinflussung nicht auftritt. Damit während des Intervalls b3 auch von außen keine Störsignale durch die offenen Schnittstellen eingefangen werden können, ist zwischen den Eingangsverstärker 220 und der mittelwertbildenden Kombinationsstufe 240 ein Kurzschlußschalter 600 eingefügt, der den symmetrischen Signalpfad während dieser kritischen Intervalle b3 kurzschließt. Die Auswirkung des kurzen Impulses auf das Ausgangssignal u5 ist gering, weil das Zeitintervall b3 im Vergleich zur Taktperiode T kurz ist und der Kurzschluß die beiden Signalleitungen auf den neutralen Mittenpegel legt. Selbstverständlich sind aufwendigere Puffer realisierbar, die den Spannungssprung während des Intervalls b3 weiter verringern.

Die erste Invertierungseinrichtung 310 befindet sich unmittelbar zwischen dem Sensorsystem 100 und dem Eingangsverstärker 220. Das Sensorsignal u1 wird durch sie invertiert oder nicht invertiert und bildet ein Differenzsignal u2, das dem Eingangsverstärker 220 zugeführt ist. Dessen Differenz-Ausgangssignal u3 ist einer symmetrischen, kapazitiv überbrückten Impedanzwandlerstufe 230 zugeführt, deren Ausgänge mit einem Spannungsteiler verbunden sind, dessen Mittelabgriffsspannung über eine erste Regelschaltung 620 den Arbeitspunkt des Eingangsverstärkers 220 regelt. Das Ausgangssignal u3' der Inpedanzwandlerstufe 230 ist einer zweiten Invertierungseinrichtung 320 zugeführt, deren Ausgangssignal u4 als Differenzsignal den Eingang der mittelwertbildenden Kombinationsstufe 240 speist. Deren Ausgang liefert das gewünschte Ausgangssignal u5. An die Ausgangsklemmen der Stufe 240 ist wie beim Eingangsverstärker 220 ein Spannungsteiler angeschlossen, dessen Mittelabgriffsspannung der zweiten Regelschaltung 640 zugeführt ist, um den Arbeitpunkt des Ausgangssignals u5 auf den Spannungswert u2r zu regeln, der bei einer CMOS-Realisierung zweckmäßigerweise auf 2,5 V gelegt wird. Die zweite Regelschaltung 640 enthält in ihrem Eingang einen Differenzverstärker 645, dessen Ausgang zwei Stromquellen 650, 655 ansteuert, deren Ausgangsströme auf die Ausgangsklemmen der Kombinationsstufe 240 geschaltet sind. Die beiden Regelströme überlagern sich dabei den Ausgangsströmen des Transkonduktanzverstärkers 240. Durch die Stromüberlagerung wird der Mittelwert des Ausgangssignals u5 auf den gewünschten Arbeitspunkt ur2 gebracht.

Um die Toleranzen der Rückkopplungswiderstände R1, R2 auszugleichen, wird im Signalpfad nach diesen beiden Rückkopplungswiderständen eine dritte Invertierungseinrichtung 330 eingefügt. Dadurch wird aus einem Sensorsignal u6 nach den Rückkopplungswiderständen ein Sensorsignal u7 gebildet, das bei der beschriebenen Operationsverstärkeranordnung 200 identisch zum Eingangssignal u1 ist.

Ein wesentlicher Schaltungsblock der gesamten Sensorschaltung ist das eigentliche Sensorsystem 100, das im Ausführungsbeispiel ein umschaltbares Hall-Sensorsystem ist. Eine quadratische Hall-Platte steht in Fig. 1 symbolisch für eine einzige oder eine Mehrzahl parallelgeschalteter Hall-Platten. Durch eine Mehrzahl parallelgeschalteter Hall-Platten, deren Ausrichtung und jeweilige Stromrichtung unterschiedlich ist, läßt sich die Genauigkeit erhöhen und der resultierende Offsetfehler verringern. Ferner werden auch richtungsabhängige Einflüsse durch das Kristallgitter verkleinert. Die schematische Darstellung der Hallplatte 110 hat einen Eingangsanschluß für den Hall-Versorgungsstrom ih und gegenüberliegend einen Ausgangsanschluß, der über eine vierte Invertierungseinrichtung 340 mit einem Masseanschluß verbunden ist. Die beiden Meßanschlüsse der Hallplatte 110 sind wie die beiden Stromanschlüsse mit einem Verteilernetzwerk 120 verbunden, das über die erste und dritte Invertierungseinrichtung 310, 330 mit der Verstärkungseinrichtung 200 und über die vierte Invertierungseinrichtung 340 mit der Speiseeinrichtung 400 verkoppelt ist.

Das in Fig. 1 schematisch dargestellte Hall-Sensorsystem bewirkt mittels der Invertierungseinrichtung 340 eine Umschaltung der Stromrichtung um 90 Grad innerhalb der angeschlossenen Hall-Platten 110, 130. Durch weitere Schaltmittel können die Einspeisepunkte der Hall-Platte 110 in beliebiger Weise vertauscht werden und entsprechend die Abgriffe für die Hall-Spannungen. Dabei ist wie angegeben die Umschaltung der Stromrichtung um 90 Grad besonders zweckmäßig, weil sich die resultierenden Offsetfehler der Hall-Platte 110 in der einen Stromrichtung zur Hall-Spannung addieren und in der um 90 Grad gedrehten Stromrichtung dagegen subtrahieren. Wenn die zugehörigen Abgriffe die Hall-Spannung richtig gewählt werden, dann hat man für das Eingangssignal u1 bereits das gewünschte Sensorsignal mit der gewünschten Phasenlage. Gegebenenfalls, beispielsweise bei einer Sensorumschaltung um 180°, kann dadurch die erste Invertierungseinrichtung 310 auch entfallen. Eine zyklische Umschaltung des Hall-Stromes ih um 360 Grad begünstigt selbstverständlich die Symmetrie der Hall-Spannungsmessung, ohne daß der Aufwand wesentlich erhöht wird.

Das Ausgangssignal u5 und damit auch das vorausgehende Signal u4 dürfen die Phasenumkehr des Sensorsystems natürlich nicht mitmachen. Die Polarität des Ausgangssignals u5 ist durch eine Bezugspolarität definiert, die durch das jeweilige Sensorsystem 110 und die zu messende physikalische Größe bestimmt ist. Bei einem Hall-Sensor definiert beispielsweise die Senkrechte zur Hall-Platte 110 die Bezugsrichtung des Magnetfeldes und damit die Bezugspolarität für das Ausgangssignal u5. Ändert das äußere Magnetfeld die Polarität, dann ändert sich durch die festgelegte Beziehung auch die Polarität des Ausgangssignals u5.

Wenn das Hall-Sensorsystem als Differenzsystem ausgebildet ist, dann kann über das Verteilernetzwerk 120 ein weiteres Hall-Platten-System 130 angeschlossen werden, das in der Ausbildung möglichst gleich zum Hall-Plattensystem 110 ist. Es ist zweckmäßig, daß beide Hall-Systeme bezüglich der Ausgangsspannungen antiparallel zusammengeschaltet sind, weil dann als Meßspannung u1 nur der Differenzwert der beiden Hall-Spannungen verstärkt werden muß.

Bei der beschriebenen Sensorschaltung von Fig. 1 können somit die wesentlichen Offsetfehler durch Signalinvertierung und Mittelwertbildung ausgeschaltet werden. Eine Ausnahme ist der Offsetfehler der Kombinationsstufe 240, dessen Eingangssignal u4 ständig die gleiche Polarität aufweist. Der Beitrag dieser Stufe zum Offsetfehler ist jedoch gering und umgekehrt proportional zu der Verstärkung des Eingangsverstärkers 220. Wenn die Eingangsverstärkung 50 dB beträgt, dann geht der Offsetfehler der Kombinationsstufe 240 nur noch mit -50 dB in das Ausgangssignal u5 mit ein. Mit der beschriebenen Schaltung von Fig. 1 läßt sich beispielsweise eine Hall-Empfindlichkeit von 40 mV/mT bezogen auf das Ausgangssignal u5 erreichen.

Die vorgegebene Schaltungsanordnung mit Transkonduktanzverstärkern begünstigt auch auf vorteilhafte Weise die Linearität der Schaltungsanordnung, weil alle Transkonduktanzverstärker eingangsseitig im virtuellen Nullpunkt betrieben werden, so daß Nichtlinearitäten infolge von Spannungsdifferenzen gar nicht auftreten können. Der über die Rückkopplungswiderstände R1, R2 fließende Rückkopplungsstrom kompensiert ferner innerhalb des Hall-Plattensystems 110 bzw. 130 die jeweilige Hall-Spannung uh, so daß diese an den Anschlußklemmen nur den Spannungswert Null hat, und dies unabhängig von der Größe des zu messenden Magnetfeldes. Dadurch werden mögliche Restfehler der Offsetkompensation - bei einer 90°-Umschaltung und einer Spannungsspeisung der Hallplatte - bereits innerhalb der Hall-Platte weitgehend unterbunden.

Eine mittelwertbildende Kombinationsstufe kann auch außerhalb der Verstärkungseinrichtung 200 liegen und mit einem alternativ in der Polarität umgeschalteten Sensorsignal gespeist sein; dann muß die Invertierung mit dieser Kombinationsstufe gekoppelt sein. Dies ist beispielsweise leicht möglich, wenn das verstärkte Sensorsignal zuvor digitalisiert wird und dann mittels eines Addierers/Subtrahierers zu einem gespeicherten Sensorwert addiert/subtrahiert wird. Für die eigentliche Mittelwertbildung ist in diesem Fall jedoch besser ein digitales Filter geeignet, weil die Mittelung dort über mehrere gespeicherte Werte erfolgt und der Signalverlauf dadurch verbessert wird. Eine einfache analoge Lösung einer externen Mittelwertbildung erfolgt durch ein externes Tiefpaßfilter, das im einfachsten Fall durch ein externes RC-Glied, ein Tiefpaß 1. Ordnung, gebildet wird.

## Patentansprüche

1. Monolithisch integrierte Sensorschaltung mit
- einem Sensorsystem (100) zur Erzeugung eines elektronischen Sensorsignals (u1),
- einer Speiseeinrichtung (400) für das Sensorsystem (100),
- einer Verstärkungseinrichtung (200) zur Verstärkung des Sensorsignals (u1),
- Invertierungseinrichtungen (310, 320, 330, 340) im Signalpfad der Verstärkungseinrichtung (200), die mittels eines Umschalttaktes (t1, t2) aus einer Taktsignalquelle (500) das Sensorsignal in zeitlich gleichen Intervallen (b1, b2) in der Polarität umschalten, und
- einer mittelwertbildenden Kombinationsstufe (240), deren Eingang mit einem verstärkten Sensorsignal (u4) gespeist ist, wobei eine Bezugspolarität am Ausgang der Kombinationsstufe unabhängig vom Schaltzustand im Signalpfad mittels der Invertierungseinrichtungen (310, 320, 330, 340) gleichbleibend gesteuert ist.

2. Sensorschaltung nach Anspruch 1, **dadurch gekennzeichnet, daß** das Sensorsystem (100) ein Differenz-Sensorsystem (110, 130) enthält.

3. Sensorschaltung nach Anspruch 1 oder 2, **dadurch gekennzeichnet, daß** das Sensorsystem (100) ein Hall-Sensorsystem enthält.

4. Sensorschaltung nach Anspruch 3, **dadurch gekennzeichnet, daß** das Hall-Sensorsystem (100) in der Stromrichtung und/oder Spannungs-Meßrichtung umschaltbar ist, insbesondere um ganzzahlige Vielfache von 90 Grad bezüglich einer durch das Hall-Sensorsystem vorgegebenen Grundrichtung.

5. Sensorschaltung nach einem der Ansprüche 1 bis 4, **dadurch gekennzeichnet, daß** der Signalpfad des Sensorsignals im wesentlichen symmetrisch ausgebildet ist.

6. Sensorschaltung nach Anspruch 5, **dadurch gekennzeichnet, daß** die Verstärkungseinrichtung (200) eine Regelschaltung (620, 640) enthält, die den Arbeitspunkt des symmetrischen Signalpfades auf einem vorgegebenen Spannungspegel stabilisiert.

7. Sensorschaltung nach einem der Ansprüche 1 bis 6, **dadurch gekennzeichnet, daß** die Sensorschaltung mittels eines CMOS-Herstellungsverfahrens monolithisch integriert ist.

8. Sensorschaltung nach einem der Ansprüche 3 bis 7, **dadurch gekennzeichnet, daß** die Verstärkungseinrichtung (200) eine rückgekoppelte Operationsverstärkeranordnung ist, deren Eingangswiderstand durch den Innenwiderstand RH der angeschlossenen Hall-Platten gebildet ist, und deren Rückkopplungswiderstand bzw. Rückkopplungswiderstände R1, R2 aus dem gleichen Halbleitermaterial gebildet ist bzw. sind wie die Hall-Platten (110).

9. Sensorschaltung nach einem der Ansprüche 1 bis 8, **dadurch gekennzeichnet, daß** die Verstärkungseinrichtung (200) und/oder die Kombinationsstufe (240) einen Transkonduktanzverstärker enthält.

10. Sensorschaltung nach Anspruch 9, **dadurch gekennzeichnet, daß** der Transkonduktanzverstärker in der Kombinationsstufe (240) kapazitiv rückgekoppelt ist, wobei die resultierende Zeitkonstante mindestens so groß ist, wie der Nichtüberlappungsbereich (b3) des Umschalttaktes (t1, t2).

## Claims

1. A monolithic integrated sensor circuit comprising:
- a sensor system (100) for generating an electronic sensor signal (u1);
- a supply unit (400) for the sensor system (100);
- an amplifying facility (200) for amplifying the sensor signal (u1);
- inverting devices (310, 320, 330, 340) in the signal path of the amplifying facility (200) which reverse the polarity of the sensor signal at equal time intervals (b1, b2) by means of a switching clock (t1, t2) from a clock signal source; and
- an averaging combiner stage (240) whose input receives an amplified sensor signal (u4), and whose output has a reference polarity which is controlled by means of the inverting devices (310, 320, 330, 340) in such a way as to be always the same regardless of the switching state in the signal path.

2. A sensor circuit as claimed in claim 1, **characterized in that** the sensor system (100) comprises a differential-sensor system (110, 130).

3. A sensor circuit as claimed in claim 1 or 2, **characterized in that** the sensor system (100) comprises a Hall sensor system.

4. A sensor circuit as claimed in claim 3, **characterized in that** the current direction and/or voltage measurement direction in the Hall sensor system (100) can be changed, particularly by integral multiples of 90° with respect to a basic direction predetermined by the Hall sensor system.

5. A sensor circuit as claimed in any one of claims 1 to 4, **characterized in that** the sensor signal path is essentially symmetrical.

6. A sensor circuit as claimed in claim 5, **characterized in that** the amplifying facility (200) comprises a regulating circuit (620, 640) which stabilizes the operating point of the symmetrical signal path at a predetermined voltage level.

7. A sensor circuit as claimed in any one of claims 1 to 6, **characterized by** being monolithically integrated by a CMOS fabrication process.

8. A sensor circuit as claimed in any one of claims 3 to 7, **characterized in that** the amplifying facility (200) is a feedback operational amplifier arrangement whose input resistance is formed by the internal resistance (RH) of the Hall plates connected thereto, and whose feedback resistor or feedback resistors (R1, R2) are formed from" the same semiconductor material as the Hall plates (110).

9. A sensor circuit as claimed in any one of claims 1 to 8, **characterized in that** the amplifying facility (200) and/or the combiner stage (240) comprise/comprises a transconductance amplifier.

10. A sensor circuit as claimed in claim 9, **characterized in that** the transconductance amplifier in the combiner stage (240) has capacitive feedback, with the resulting time constant being at least as great as the nonoverlapping portion (b3) of the switching clock (t1, t2).

## Revendications

1. Circuit de détection intégré monolithique, comportant :
- un système de détection (100) pour la production d'un signal de détection électronique (u1),
- un dispositif d'alimentation (400) pour le système de détection (100),
- un dispositif d'amplification (200) pour amplifier le signal de détection (u1),
- des dispositifs d'inversion (310, 320, 330, 340) qui sont disposés dans le trajet du signal du dispositif d'amplification (200) et qui commutent la polarité du signal de détection (u1), au moyen d'un signal de synchronisation de commutation (t1, t2) provenant d'une source de signaux de synchronisation (500), à des intervalles de temps (b1, b2) égaux, et
- un étage de combinaison formant une valeur moyenne (240) dont l'entrée est alimentée par un signal de détection amplifié (u4), une polarité de référence étant commandée de manière à rester constante à la sortie de l'étage de combinaison (240) indépendamment de l'étage de commutation dans le trajet du signal, au moyen des dispositifs d'inversion (310, 320, 330, 340).

2. Circuit de détection selon la revendication 1, **caractérisé en ce que** le système de détection (100) comprend un système de détection de différence (110, 130).

3. Circuit de détection selon la revendication 1 ou 2, **caractérisé en ce que** le système de détection (100) comprend un système de détection à effet Hall.

4. Circuit de détection selon la revendication 3, **caractérisé en ce que** le système de détection (100) peut être commuté dans la direction du courant et/ou dans la direction de mesure de la tension, en particulier d'un multiple entier de 90 degrés par rapport à une direction de base prédéterminée par le système de détection à effet Hall.

5. Circuit de détection selon l'une quelconque des revendications 1 à 4, **caractérisé en ce que** le trajet du courant est conformé de manière sensiblement symétrique.

6. Circuit de détection selon la revendication 5, **caractérisé en ce que** le dispositif d'amplification (200) comprend un circuit de régulation (620, 640) qui stabilise le point de fonctionnement du trajet du courant symétrique à un niveau de tension prédéterminé.

7. Circuit de détection selon l'une quelconque des revendications 1 à 6, **caractérisé en ce que** le circuit de détection est intégré de manière monolithique au moyen d'un procédé de fabrication CMOS.

8. Circuit de détection selon l'une quelconque des revendications 3 à 7, **caractérisé en ce que** le dispositif d'amplification (200) est un dispositif amplificateur opérationnel à réaction dont la résistance d'entrée est constituée par la résistance interne RH des plaques à effet Hall connectées et dont la résistance de réaction ou les résistances de réaction R1 et R2 sont constituées de la même matière semi-conductrice que les plaques à effet Hall (100).

9. Circuit de détection selon l'une quelconque des revendications 1 à 8, **caractérisé en ce que** le dispositif d'amplification (200) et/ou l'étage de combinaison (240) contiennent un amplificateur à transconductance.

10. Circuit de détection selon la revendication 9, **caractérisé en ce que** l'amplificateur à transconductance est branché avec une réaction négative dans l'étage de combinaison (240), la constante de temps qui en résulte étant aussi grande que la zone de non-recouvrement du signal de synchronisation de commutation (t1, t2).
